# EUROPEAN PATENT SPECIFICATION

(11) **EP 0 506 812 B1**
(45) Date of publication and mention of the grant of the patent: **22.10.1997**
(21) Application number: 91901842.4
(22) Date of filing: 21.12.1990
(51) Int. Cl.: B65G 21/14, B65G 41/00

(54) **FOLDABLE FRAMEWORK FOR BELT CONVEYOR**
FALTBARES GESTELL FÜR BANDFÖRDERER
CHASSIS PLIANT POUR CONVOYEUR A BANDE

(30) Priority: 22.12.1989 GB 8929011
(43) Date of publication of application: 07.10.1992
(73) Proprietor: Douglas, Patrick J., Santon, Douglas, Isle of Man (GB)
(72) Inventor: Douglas, Patrick J., Santon, Douglas, Isle of Man (GB)
(74) Representative: Orr, William McLean
(86) International application number: GB9002013
(87) International publication number: WO9109797

(56) References cited:
- EP-A- 0 338 752
- CA-A- 1 057 225
- FR-A- 2 545 068

## Description

This invention relates to a foldable framework for supporting a belt conveyor for handling bulk material and especially a portable or mobile troughed-belt conveyor.

Troughed-belt conveyors are typically incorporated into processing plants for bulk material (such as coal, soil, gravel and mineral ores) where they are variously used for feeding, transporting, elevating and stock piling materials around the processing plant. When the processing plant is required to be readily movable from place to place, either around a site or between different sites, it is often found that the lengths of the troughed-belt conveyors render the plant unwieldy and difficult or impossible to move. This is especially the case when plant is to be moved along public road where there are legal limits to the maximum permissible overall dimensions of vehicles. There is therefore a requirement for a means to enable troughed-belt conveyors to be readily foldable.

Hitherto, portable and mobile processing plant has incorporated foldable conveyors but such conveyors have often been awkward or dangerous to fold or deploy: they have often needed assistance from a loading shovel or a crane: and they have often been limited to less than optimum deployed length by shortcomings in the folding mechanisms. In other cases, foldable troughed-belt conveyor frameworks have been either excessively complicated, making them expensive and troublesome, or else so ineffectual that they remain bulky and unwieldy even when in their folded position.

The present invention therefore seeks to provide an improved design of foldable framework for bulk conveyors.

It is known from CA-A-1057225 to provide a side-fold conveyor which comprises a horizontal support frame on which an endless conveyor belt is mounted, and which is supported by a wheel set, and which normally maintains the endless conveyor belt in a position parallel to the ground surface on which the support frame is mounted. The support frame comprises three separate parts, namely a long middle portion and a pair of pivotally connected end portions, in which the end portions are pivotable about substantially vertical pivots in order to move between an extended operative position in which all three support frame sections are aligned, and with the endless conveyor belt adopting the same configuration, whereas the end portions can be swung horizontally to inoperative positions, by pivoting about the vertical pivots, in order to take up transport positions in which the end portions are folded to extend alongside the central frame section.

According to the invention there is provided a foldable framework for supporting a belt conveyor and which comprises:
a fixed base frame;
a moveable support frame connected to the base frame via a first pivot connection and being moveable between an operative conveyor support position in co-operation with the fixed base frame and an inoperative position suitable for storage and / or transport of the framework and a conveyor supported thereby; characterised by:
a support leg connected at its lower end to the base frame via a second pivot connection and connected at its upper end to the moveable frame, said leg serving to control movement of the moveable frame between its operative and inoperative positions;
a sloping support framework forming part of said fixed base frame, said moveable support frame forming an upwardly sloping prolongation of the sloping support framework to support the belt conveyor when the support frame is in its operative position, and which frame can take up a laterally displaced inoperative position extending transversely of the base frame; and,
a power-operated device which interconnects the base frame and the moveable frame and which is operative to move the frame between its operative and inoperative positions, said first pivot connection and said second pivot connection being universal type pivot connections which allow, respectively, the support frame and the support lege each to pivot about more than one axis as the frame moves between the operative position and the inoperative position, wherein as the support leg and the moveable frame move between the operative position and the inoperative position, the moveable frame is constrained to swing laterally about its first universal type connection and simultaneously to roll about its general longitudinal axis.

The invention therefore provides a novel construction of foldable framework for supporting a bulk conveyor, such as a troughed-belt conveyor, and which is uncomplicated in its construction, and yet which provides for an unusually large ratio between open and closed envelopes. The invention further provides a powered device for folding and deploying the framework, and also provides a structure which is particularly simple to fold and deploy.

In a preferred arrangement, the moveable frame pivots through an angle of at least 80° about the first universal type connection between its operative and inoperative positions.

Preferably, an additional support leg is provided for the moveable frame and which is connected at its lower end to the fixed frame via a third universal type connection. The additional support lege may comprise a telescopic arrangement which can be locked in any extended position to support the moveable frame in its operative position, but which can be unlocked and then caused to shorten its length as the moveable frame is pivoted to the inoperative position under the action of the power operated device and the first mentioned support leg.

The upper ends of the first mentioned support leg, and of the additional support legs, also may be connected via universal type connections at their upper ends to the movable frame.

The universal type connections provided in the framework according to the invention may comprise any convenient means, such as universal joints, loose fit pivots and elastomeric bearing joints.

In a preferred embodiment, the relative lengths of the movable frame and the first mentioned support leg, and the distances apart and dispositions of the various universal type connections are so arranged that:
in the deployed position, the fixed frame and the movable frame are constrained to be aligned, end to end, to form a continuous straight upwardly-sloping conveyor framework whose overhanging portion is at least partially supported by the support leg;
as the support leg and the movable frame move to the inoperative or folded position, the movable frame is constrained to swing laterally about its first universal type connection to the fixed frame, and simultaneously rolls about its general longitudinal axis; and,
when the movable frame reaches the folded position, the movable frame makes an angle of approximately a right angle with the fixed frame, when viewed from above, and it has simultaneously twisted about its general longitudinal axis also through approximately a right angle relative to the fixed frame, so that those faces of the frame which were its sides in the deployed or operative position are now its uppermost and lowermost faces.

One embodiment of foldable framework according to the invention will now be described in detail, by way of example only, with reference to the accompanying drawings, in which:
Figure 1 is a perspective illustration of the framework in its unfolded, operative position suitable for supporting an inclined belt-type conveyor; and,
Figure 2 is a similar perspective view, but showing the framework in its folded, inoperative position.

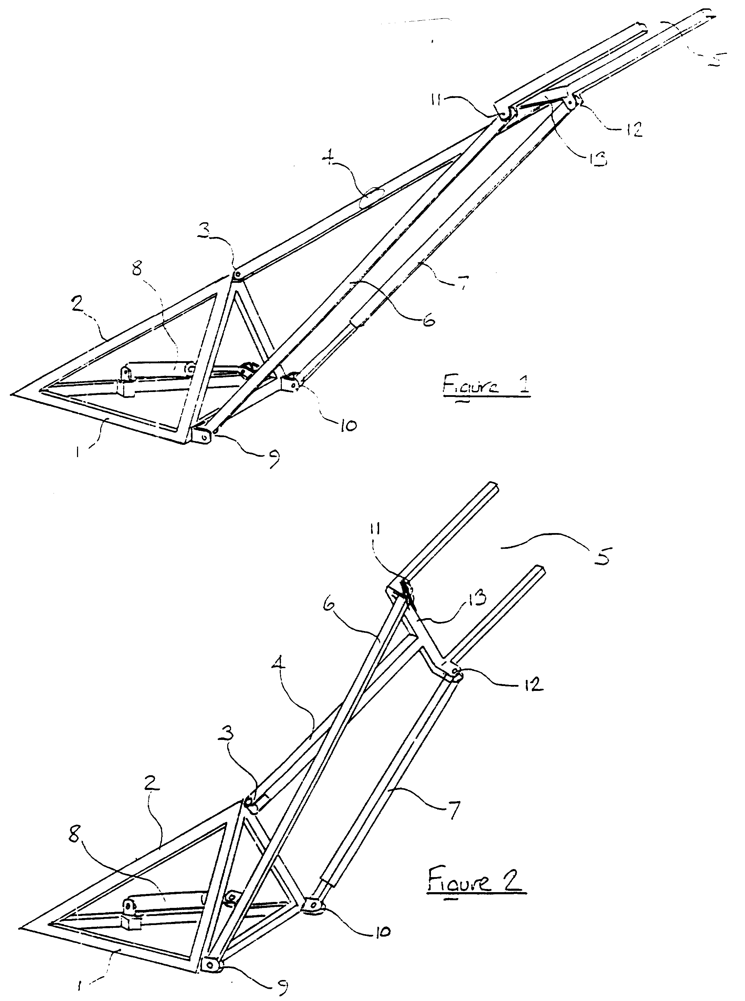

Referring now to Figure 1, there is seen a fixed base framework 1 which rigidly supports a length of sloping conveyor framework 2, at the uppermost end of which is a first universal joint connection 3 to a second length of sloping conveyor framework 4. The outer end 5 of the framework 4 is supported and located by a pair of supporting legs 6 and 7, leg 6 being a simple rigid strut member and leg 7 being of telescopic construction. (In the position shown, leg 7 is fully extended and secured by means of a through-peg not shown). The supporting legs 6 and 7 are connected at their lowermost ends to the base framework 1 by means of second and third universal joints 9 and 10 respectively. An hydraulic cylinder 8 is pivotally connected across joint 9 between the framework 1 and the leg 6, and forms a power-operated device operable to pivot the movable part of the framework between operative and inoperative positions.

It will be readily apparent that in the position shown, with the hydraulic cylinder 8 and the telescopic leg 7 fully extended, the sloping conveyor frameworks 2 and 4 are aligned end-to-end, and are constrained to slope upwardly towards the furthermost end 5. When equipped with driving and supporting rollers and an endless flexible conveyor belt, this composite framework forms an upwardly sloping conveyor whose overhanging portion is supported by the legs 6 and 7, somewhat in the manner of an inclined tripod.

It should be noted that in the embodiment shown, a cross-beam 13, which is rigidly connected to the conveyor framework 4, must be provided in order to space the supporting legs apart sufficiently to allow the conveyor belt to pass between them.

Referring now to Figure 2, it is seen that the cylinder 8 has been retracted, causing telescopic leg 7 similarly to retract, and that the framework 4 has been constrained by the rigid supporting leg 6 to swing laterally about its universal joint 3 into a foldable position where it hangs approximately at right angles to the framework 2 when viewed from above. It is further seen that framework 4 has been constrained by the leg 6 to roll or twist about its longitudinal axis through approximately a right angle during its movement from the working position shown in Figure 1, so that the underside of the conveyor now faces outwardly.

In this position the folded conveyor may be arranged to fit between or around other components of a mobile or portable processing plant in a particularly compact fashion. Thus it is seen that all the objectives of the invention are achieved by means of a singularly uncomplicated linkage.

The invention is not limited to the embodiment hereinbefore described. For example, the universal joints 3, 9 and 10 may be constructed as elastomeric bearings, ball joints or as simple hinges or pivots so mounted as to swing about suitable axes; or the hydraulic cylinder 8 may be a different type of actuator, or it may be connected across different components of the linkage. It should also be noted that the telescopic leg is not fundamental to the invention, and may be omitted entirely from an optional embodiment of the invention.

## Claims

1. A foldable framework for supporting a belt conveyor and which comprises:
a fixed base frame (1);
a moveable support frame (4) connected to the base frame (1) via a first pivot connection (3) and being moveable between an operative conveyor-support position in co-operation with the fixed base frame (1) and an inoperative position suitable for storage and / or transport of the framework and a conveyor supported thereby; characterised by
a support leg (6) connected at its lower end to the base frame (1) via a second pivot connection (9) and connected at its upper end to the moveable frame (4), said leg serving to control movement of the moveable frame (4) between its operative and inoperative positions;
a sloping support framework (2) forming part of said fixed base frame (1), said moveable support frame (4) forming an upwardly sloping prolongation of the sloping support framework (2) to support the belt conveyor when the support frame (4) is in its operative position, and which frame (4) can take up a laterally displaced inoperative position extending transversely of the base frame; and,
a power-operated device (8) which interconnects the base frame (1) and the moveable frame (4) and which is operative to move the frame (4) between its operative and inoperative positions, said first pivot connection (3) and said second pivot connection (9) being universal type pivot connections which allow, respectively, the support frame (4) and the support leg (6) each to pivot about more than one axis as the frame (4) moves between the operative position and the inoperative position, wherein as the support leg (6) and the moveable frame (4) move between the operative position and the inoperative position, the moveable frame (4) is constrained to swing laterally about its first universal type connection (3) and simultaneously to roll about its general longitudinal axis.

2. A foldable framework according to Claim 1, in which the moveable frame (4) is pivotable through an angle of at least 80° about said first pivot connection (3) between its operative and inoperative position.

3. A foldable framework according to Claim 1 or 2, including an additional support leg (7) which is connected at its upper end to said moveable frame (4), said support leg (7) being connected at its lower end to the fixed base frame (1) via a third universal type connection (10).

4. A foldable framework according to Claim 3, in which said additional support leg (7) comprises a telescopic arrangement which can be locked in an extended position to support the moveable frame (4) in its operative position, but which can be unlocked and then caused to shorten its length as the moveable frame (4) is pivoted to the inoperative position under the action of the power operated device (8) and the first mentioned support leg (6).

5. A foldable framework according to Claim 4, in which the upper ends of said first support leg (6) and of said additional support leg (7) are connected at their upper ends to the moveable frame (4) via respective universal type connections (11, 12).

6. A foldable framework according to any one of Claims 1 to 5, in which the universal type connections (3, 9, 10, 11 and 12) provided in the framework comprise universal joints, loose fit pivots or elastomeric bearing joints.

7. A foldable framework according to any one of Claims 1 to 6, in which the relative lengths of the moveable frame (4) and the first mentioned support leg (6), and the distances apart and arrangements of the universal type connections (3, 9 10, 11 and 12) are so arranged that:
in the operative position of the moveable frame (4), a continuous straight upwardly-sloping conveyor framework is formed having an overhanging portion which is at least partly supported by said support leg (6);
and when the moveable frame (4) reaches the inoperative position, it makes an angle of approximately a right angle with the fixed frame (1) when viewed from above, and it has simultaneously twisted about its general longitudinal axis through approximately a right angle relative to the fixed frame (1), so that those faces of the moveable frame (4) which were its sides in the operative position are now its uppermost and lowermost faces.

## Patentansprüche

1. Faltbares Fachwerk zum Tragen eines Bandförderers, welches aufweist:
einen feststehenden Basisrahmen (1);
einen bewegbaren Tragrahmen (4), der über eine erste Schwenkverbindung (3) mit dem Basisrahmen (1) verbunden ist und zwischen einer Förderer-Stütz-Arbeitsstellung, die in Zusammenarbeit mit dem feststehenden Basisrahmen (1) vorgegeben ist, und einer Ruhestellung, die zum Aufbewahren und/oder Transportieren des Fachwerkes und eines von diesem getragenen Förderers geeignet ist, verlagerbar ist; gekennzeichnet durch
ein Stützbein (6), das an seinem untenliegenden Ende über eine zweite Schwenkverbindung (9) mit dem Basisrahmen (1, 2) verbunden ist und an seinem oberen Ende mit dem bewegbaren Rahmen (4) verbunden ist und welches dazu dient, die Bewegung des bewegbaren Rahmens (4) zwischen seiner Arbeitsstellung und seiner Ruhestellung zu steuern;
ein ansteigendes Tragfachwerk (2), welches einen Teil des feststehenden Basisrahmens (1) bildet, wobei der bewegbare Tragrahmen (4) eine nach oben ansteigende Verlängerung des ansteigenden Tragfachwerkes (2) bildet, um den Bandförderer zu tragen, wenn sich der Tragrahmen (4) in seiner Arbeitsstellung befindet, welcher Rahmen (4) eine seitlich verlagerte Ruhestellung einnehmen kann, die in transversaler Richtung des Basisrahmens verläuft;
und eine von einer Energiequelle her betriebene Einrichtung (8), durch welche der Basisrahmen (1) und der bewegbare Rahmen (4) miteinander verbunden sind und welche so arbeitet, daß sie den Rahmen (4) zwischen seiner Arbeitsstellung und seiner Ruhestellung bewegt, wobei die erste Schwenkverbindung (3) und die zweite Schwenkverbindung (9) Universalgelenkverbindungen sind, die es ermöglichen, daß der Tragrahmen (4) und das Stützbein (6) jeweils um mehr als eine Achse verschwenken können, wenn sich der Tragrahmen (4) zwischen der Arbeitsstellung und der Ruhestellung bewegt, wobei mit der Bewegung des Stützbeines (6) und des bewegbaren Rahmens (4) zwischen der Arbeitsstellung und der Ruhestellung der bewegbare Rahmen (4) so zwangsweise geführt ist, daß er in seitlicher Richtung um seine erste Universalgelenkverbindung (3) schwingt und gleichzeitig um seine allgemeine Längsachse rollt.

2. Faltbares Fachwerk nach Anspruch 1, bei welchem
der bewegbare Rahmen (4) um die erste Universalgelenk-Verbindung (3) um einen Winkel von mindestens 80° zwischen seiner Arbeitsstellung und seiner Ruhestellung verschwenkbar ist.

3. Faltbares Fachwerk nach Anspruch 1 oder 2, mit einem
zusätzlichen Stützbein (7), das an seinem oberen Ende mit dem bewegbaren Rahmen (4) verbunden ist, wobei dieses Stützbein (7) an seinem unteren Ende mit dem feststehenden Basisrahmen (1) über eine dritte Universalgelenk-Verbindung (10) verbunden ist.

4. Faltbares Fachwerk nach Anspruch 3, bei welchem
das zusätzliche Stützbein (7) eine Teleskopanordnung umfaßt, welche in einer ausgefahrenen Stellung verriegelbar ist, in welcher sie den bewegbaren Rahmen (4) in seiner Arbeitsstellung abstützt, welche jedoch entriegelt werden kann und dann in ihrer Länge verkleinert werden kann, wenn der bewegbare Rahmen in seine Ruhestellung verschwenkt wird, was unter der Einwirkung der von einer Energiequelle her betriebenen Einrichtung (8) und des erstgenannten Stützbeines (6) erfolgt.

5. Faltbares Fachwerk nach Anspruch 4, bei welchem die
oberen Enden des erstgenannten Stützbeines (6) und des zusätzlichen Stützbeines (7) an ihren oberen Enden jeweils durch eine Universalgelenk-Verbindung (11, 12) mit dem bewegbaren Rahmen (4) verbunden sind.

6. Faltbares Fachwerk nach einem der Ansprüche 1 bis
5, bei welchem die Universalgelenk-Verbindungen (3, 9, 10, 11 und 12), die in dem Fachwerk vorgesehen sind, Kardangelenke, lose gepaßte Stiftverbindungen oder Elastomerlager-Verbindungen aufweisen.

7. Faltbares Fachwerk nach einem der Ansprüche 1 bis 6, bei welchem die relativen Längen des bewegbaren Rahmens (4) und des erstgenannten Stützbeines (6) und die Beabstandung und die Anordnung der verschiedenen Universalgelenk-Verbindungen (3, 9, 10, 11 und 12) so gewählt sind, daß
in der Arbeitsstellung des bewegbaren Rahmens (4) ein durchgehendes geradliniges nach oben ansteigendes Fördererfachwerk gebildet wird, dessen überhängender Abschnitt zumindest teilweise durch das Stützbein (6) abgestützt ist;
und der bewegbare Rahmen (4) dann, wenn er seine Ruhestellung erreicht, mit dem feststehenden Basisrahmen (1) von oben gesehen einen Winkel einschließt, der etwa ein rechter Winkel ist, und sich gleichzeitig um seine allgemeine Längsachse um einen Winkel bezüglich des feststehenden Basisrahmens (1) gedreht hat, der ungefähr ein rechter Winkel ist, so daß diejenigen Begrenzungsflächen des bewegbaren Rahmens (4), welche in der Arbeitsstellung seine Seitenflächen waren, nun seine unterste und oberste Begrenzungsfläche darstellen.

## Revendications

1. Châssis pliant destiné à supporter un convoyeur à bande et comprenant :
un cadre de base fixe (1) ;
un cadre de support mobile (4) relié au cadre de base (1) par l'intermédiaire d'une première articulation à pivot (3) et mobile entre une position opérationnelle de support de convoyeur en coopération avec le cadre de base fixe (1) et une position non opérationnelle adaptée pour le stockage et/ou le transport du châssis, et un convoyeur supporté par celui-ci ; caractérisé par
un pied de soutien (6) relié, à son extrémité inférieure, au cadre de base (1) par l'intermédiaire d'une seconde articulation à pivot (9) et relié, à son extrémité supérieure, au cadre mobile (4), ledit pied servant à régler le mouvement du cadre mobile (4) entre ses positions opérationnelle et non opérationnelle ;
un châssis de support orienté à l'oblique (2) faisant partie dudit cadre de base fixe (1), ledit cadre de support mobile (4) formant une extension en pente ascendante du châssis de support orienté à l'oblique (2) destinée à supporter le convoyeur à bande lorsque le cadre de support (4) est en position opérationnelle, et lequel cadre (4) peut prendre une position non opérationnelle déplacée latéralement s'étendant transversalement par rapport au cadre de base ; et
un dispositif commandé par moteur (8) qui relie le cadre de base (1) et le cadre mobile (4) et qui sert à déplacer le cadre (4) entre ses positions opérationnelle et non opérationnelle, ladite première articulation à pivot (3) et ladite seconde articulation à pivot (9) étant des articulations à pivot de type universel permettant, respectivement, au cadre de support (4) et au pied de soutien (6) de pivoter chacun autour de plus d'un axe quand le cadre passe des positions opérationnelle à non opérationnelle, dans lequel lorsque le pied de soutien (6) et le cadre mobile (4) se déplacent entre la position opérationnelle et la position non opérationnelle, le cadre mobile (4) est contraint à pivoter latéralement autour de sa première articulation de type universel (3) et simultanément de rouler autour de son axe longitudinal général.

2. Châssis pliant selon la revendication 1, dans lequel le cadre mobile (4) peut pivoter sur un angle d'au moins 80° autour de ladite première articulation à pivot (3) entre ses positions opérationnelle et non opérationnelle.

3. Châssis pliant selon la revendication 1 ou 2, comprenant un pied de soutien supplémentaire (7) qui est relié, à son extrémité supérieure, audit cadre mobile (4), ledit pied de soutien (7) étant relié, à son extrémité inférieure, au cadre de base fixe (1) par l'intermédiaire d'une troisième articulation de type universel (10).

4. Châssis pliant selon la revendication 3, dans lequel ledit pied de soutien supplémentaire (7) comprend un agencement télescopique qui peut être verrouillé en position étendue pour supporter le cadre mobile (4) dans sa position opérationnelle, mais qui peut être déverrouillé puis amené à réduire sa longueur quand le cadre mobile (4) pivote en position non opérationnelle sous l'action du dispositif actionné par moteur (8) et du premier pied de soutien mentionné (6).

5. Châssis pliant selon la revendication 4, dans lequel les extrémités supérieures dudit premier pied de soutien (6) et dudit pied de soutien supplémentaire (7) sont reliées, à leur extrémité supérieure, au cadre mobile (4) par l'intermédiaire d'articulations de type universel respectives (11, 12).

6. Châssis pliant selon l'une quelconque des revendications 1 à 5, dans lequel les articulations de type universel (3, 9, 10, 11 et 12) prévues dans le châssis comprennent des joints universels, des pivots à ajustement libre ou des joints d'appui élastomères.

7. Châssis pliant selon l'une quelconque des revendications 1 à 6, dans lequel les longueurs relatives du cadre mobile (4) et du premier pied de soutien mentionné (6), et les distances les séparant ainsi que les agencements des articulations de type universel (3, 9, 10, 11 et 12) sont agencées de telle sorte que :
dans la position opérationnelle du cadre mobile (4), un châssis pour convoyeur continu, droit, orienté à l'oblique vers le haut, est formé présentant une partie en surplomb qui est au moins partiellement supportée par ledit pied de soutien (6) ;
et quand le cadre mobile (4) atteint la position non opérationnelle, il forme avec le cadre fixe (1) un angle ressemblant à un angle droit quand il est vu du dessus, et il est simultanément torsadé autour de son axe longitudinal général sur approximativement un angle droit par rapport au cadre fixe (1), de sorte que ces faces du cadre mobile (4) qui étaient ses côtés dans la position opérationnelle sont maintenant ses faces supérieure et inférieure.
